# EUROPÄISCHE PATENTSCHRIFT

(11) **EP 1 037 124 B1**
(45) Veröffentlichungstag und Bekanntmachung des Hinweises auf die Patenterteilung: **08.06.2005**
(21) Anmeldenummer: 00105722.3
(22) Anmeldetag: 17.03.2000
(51) Int. Cl.: G05B 19/042

(54) **Vorrichtung zur Steuerung beliebiger Funktionseinrichtungen im Haus**
Apparatus for the control of any domestic functional device
Appareil pour la commande d'un dispositif fonctionnel domestique

(30) Priorität: 18.03.1999 DE 19912058; 11.09.1999 DE 19943450
(43) Veröffentlichungstag der Anmeldung: 20.09.2000
(73) Patentinhaber: Rothengass, Wolfgang, 74838 Limbach / Laudenberg (DE)
(72) Erfinder: Rothengass, Wolfgang, 74838 Limbach / Laudenberg (DE)
(74) Vertreter: Naumann, Ulrich, Dr.-Ing.

(56) Entgegenhaltungen:
- EP-A- 0 620 631
- WO-A-96/12993
- DE-C- 4 032 285
- GB-A- 2 100 042
- US-A- 5 450 075
- US-A- 5 481 481
- US-A- 5 565 855
- "BUILDING MANAGEMENT SYSTEMS FUNDAMENTALS." HONEYWELL INC. SECTION OF ENGINEERING MANUAL OF AUTOMATIC CONTROL 77-1100., - 1988 XP002145456 USA
- HAINES R. W.: "CONTROL SYSTEMS FOR HEATING, VENTILATING AND AIR CONDITIONING" 1987 , VAN NOSTRAND REINHOLD COMPANY , USA XP002145419 * Seite 41 - Seite 54 * * Seite 73 - Seite 77 * * Seite 130 - Seite 176 *
- "LM SERIES DIRECT COUPLED ACTUATOR." BELIMO LM DOCUMENTATION., März 1999 (1999-03), Seiten 4-16, XP002145457 USA

## Beschreibung

Die Erfindung betrifft eine Vorrichtung zur Steuerung beliebiger Funktionseinrichtungen im Haus, beispielsweise Licht, Rolladen oder Heizung, mit einer eine Steuereinrichtung umfassenden Zentrale mit Bedienungseinheit, wobei die Zentrale eine Empfangseinrichtung aufweist und Steuersignale drahtlos an den jeweiligen Funktionseinrichtungen zugeordnete Empfangsbaugruppen sendet, wobei die Empfangsbaugruppen jeweils einen Empfänger aufweisen.

Vorrichtungen der eingangs genannten Art existieren in der Praxis und sind in unterschiedlichsten Ausführungsformen realisiert. Dabei handelt es sich beispielsweise um sogenannte Bus-Systeme, über die unterschiedlichste Funktionseinrichtungen im Haus steuerbar sind. Derartige Bus-Systeme bieten eine grosse Vielfalt an Steuerungsmöglichkeiten und werden immer häufiger beim Hausbau verwirklicht.

Der Nachteil dieser Bus-Systeme besteht darin, dass sie sehr teuer sind und bereits bei der Konzeption und dem Bau eines Hauses mit eingeplant werden müssen. Eine nachträgliche Installation derartiger Bus-Systeme ist äußerst aufwendig, da hier eine Vielzahl von Leitungen neu verlegt werden muss. Diese müssten entweder unter dem Putz oder auf dem Putz angeordnet werden, was einerseits sehr viel Schmutz und andererseits eine unschöne Optik zur Folge hat. In der Praxis kommt daher die Nachrüstung derartiger Bus-Systeme im häuslichen Bereich nicht in Frage.

Da es in der heutigen Zeit äußerst wichtig ist, Energie in jeder Form zu sparen, um Rohstoffreserven aufrechtzuerhalten, ist es wünschenswert, eine einfachere und nachrüstbare Vorrichtung zur Steuerung beliebiger Funktionseinrichtungen im Haus zu realisieren, mit der eine ähnliche Vielfalt an Steuerungsmöglichkeiten wie bei einem Bus-System erreicht ist. Hierdurch ließe sich ein energiesparender Betrieb von Funktionseinrichtungen realisieren.

Die EP-A-0 620 631 zeigt eine Vorrichtung zur Steuerung beliebiger Funktionseinrichtungen mit allen Merkmalen des Oberbegriffs des Patentanspruchs 1. Aus dem Dokument ist ein paralleler Aufbau einer Kabelverbindung und einer drahtlosen Verbindung zwischen einer Zentrale und Funktionseinrichtungen bekannt. Im Konkreten ist hier eine Steuerung der Funktionseinrichtungen beschrieben, die letztendlich dahingehend auf die Funktionseinrichtungen einwirkt, dass die Betriebszeiten der Funktionseinrichtungen gesteuert werden. Die Übertragung der Steuersignale erfolgt über eine Infrarotverbindung.

Aus der WO-A-96 12993 ist eine Vorrichtung zur Steuerung beliebiger Funktionseinrichtungen bekannt, die außerhalb eines Hauses angeordnet sind. Dabei ist eine parallele Anordnung einer Kabelverbindung und einer drahtlosen Verbindung zur Kommunikation zwischen der Zentrale und Funktionseinrichtungen vorgesehen.

Aus der US-A-5 481 481 ist ein automatisches Diagnosesystem mit drahtlos angeordneten Sensoren bekannt. Dabei werden Daten von den Sensoren zu einer zentralen Einheit übertragen und dort ausgewertet. Eine drahtlose Steuerung beliebiger Funktionseinrichtungen im Haus ist hier nicht beschrieben.

Aus dem Handbuch 'BUILDING MANAGEMENT SYSTEMS FUNDAMENTALS.' HONEYWELL INC. SECTION OF ENGINEERING MANUAL OF AUTOMATIC CONTROL 77-1100., - 1998 XP002145456 US, ist eine Vorrichtung zur Steuerung von Funktionseinrichtungen in einem Haus beschrieben. Dabei ist jedoch keine drahtlose Übertragung von Steuersignalen offenbart.

Aus dem Dokument HAINES R.W.: 'CONTROL SYSTEMS FOR HEATING, VENTILATING AND AIR CONDITIONING' 1987, VAN NOSTRAND REINHOLD COMPANY, USA XP002145419 sind elektrische und elektronische Steuersysteme bekannt. Von einer Vorrichtung zur Steuerung beliebiger Funktionseinrichtungen in einem Haus ist hier jedoch nicht die Rede. Des Weiteren ist hier keine drahtlose Übertragung von Steuersignalen offenbart.

Aus der DE-A-40 32 285 ist ein flüssigkeitsgefülltes thermostatisches System zur Steuerung von Heizungsventilen bekannt. Eine Einrichtung zur Steuerung beliebiger Funktionseinrichtungen in einem Haus, bei der Steuersignale drahtlos übertragen werden, ist hier nicht beschrieben.

Aus der US-A-5 450 075 ist eine Rotationssteuerung für eine Musikmischanlage bekannt. Von einer Vorrichtung zur Steuerung beliebiger Funktionseinrichtungen in einem Haus ist hier nicht die Rede.

Aus der US-A-5 565 855 ist eine Vorrichtung zur Steuerung beliebiger Funktionseinrichtungen im Haus bekannt. Die Steuereinrichtung sendet nicht direkt drahtlos, sondern über einen in dem jeweiligen Raum angeordneten, an einen Bus angeschlossenen Transponder an die zugeordneten Empfangsbaugruppen. Dabei ist der Bus mit der Steuereinrichtung verbunden. Dabei findet eine Aufwärtskommunikation mit der Empfangseinrichtung der Zentrale lediglich durch die Fembedienung der Empfangsbaugruppen statt.

Der vorliegenden Erfindung liegt daher die Aufgabe zugrunde, eine Vorrichtung der eingangs genannten Art anzugeben, bei der eine möglichst umfassende und sichere Steuerung vorgebbarer Funktionen der Funktionseinrichtungen in einem Haus mit konstruktiv einfachen Mitteln auch auf dem Nachrüstweg ermöglicht ist.

Die erfindungsgemäße Vorrichtung zur Steuerung beliebiger Funktionseinrichtungen im Haus löst die obige Aufgabe mit den Merkmalen des Patentanspruchs 1.

Mit einer derartigen Ausgestaltung einer Vorrichtung kann auf verlegte Leitungen im Haus nahezu ganz verzichtet werden. Insbesondere für die Nachrüstung eines Hauses mit einer derartigen Vorrichtung stellt der Verzicht auf Leitungen eine ganz erhebliche Vereinfachung dar.

Die Zentrale weist in besonders komfortabler Weise eine Empfangseinrichtung auf. Dadurch ist eine Rückkopplung mit den Empfangsbaugruppen möglich. Zusätzlich hierzu steht die Zentrale mit Sensoren in Kommunikation, die beispielsweise Informationen über Temperaturen oder Positionen des Stellglieds an die Zentrale übermitteln. Diese Informationen können bei der Steuerung der Funktionseinrichtungen berücksichtigt werden.

Zur Feststellung, ob die Zentrale fehlerfrei arbeitet oder überhaupt arbeitet, erfolgt ein periodisches Abfragen bei der Zentrale durch die Empfangsbaugruppen. Sollte die Zentrale außer Funktion oder ganz außer Betrieb sein, so könnten die Funktionseinrichtungen in den ungesteuerten Normalbetrieb übergehen. Ein derartiges Polling könnte Fehlsteuerungen durch eine nicht fehlerfrei oder durch eine überhaupt nicht arbeitende Zentrale vermeiden. Durch das Polling werden die Empfangsbaugruppen für eine bestimmte Zeit retriggert. Sollte aus irgendeinem Grund die Zentrale ausfallen, so geht der Empfänger bzw. die Empfangsbaugruppe nach der Triggerzeit in eine Rückfallebene über, bei der beispielsweise die Absenkung der Temperatur beendet oder rückgängig gemacht wird.

Folglich ist mit der erfindungsgemäßen Vorrichtung zur Steuerung beliebiger Funktionseinrichtungen im Haus eine Vorrichtung angegeben, bei der eine Steuerung beliebiger Funktionseinrichtungen in einem Haus mit konstruktiv einfachen Mitteln auch auf dem Nachrüstweg erreicht ist. Hierbei ist eine nahezu optimale Steuerung sämtlicher Energiekreise wie beispielsweise Warmwasser-Kreislauf oder der elektrischen Versorgung ermöglicht. Hierdurch können wertvolle Rohstoffe und auch Kosten für den Verbraucher eingespart werden.

Im Hinblick auf eine besonders einfache Steuereinrichtung könnte die Steuereinrichtung ein Rechner sein, wobei hier ein herkömmlicher Personal Computer einsetzbar ist. Die Steuereinrichtung könnte in besonders komfortabler Weise einen Zeitgeber aufweisen, so dass eine individuelle Zeitsteuerung der Funktionseinrichtungen ermöglicht ist. Dabei könnte der Zeitgeber eine RTC-Uhr oder eine DCF77 sein. Das Vorsehen einer Funkuhr ermöglicht dabei eine besonders präzise Zeitsteuerung.

Im Hinblick auf eine besonders einfache Eingabe der gewünschten Steuerdaten könnte die Bedienungseinheit ein Tastenfeld aufweisen. Dabei könnte es sich auch um eine Computer-Tastatur handeln. Für jede Funktionseinrichtung und für jede Empfangsbaugruppe sind dabei unterschiedliche Daten eingebbar.

Die Steuersignale könnten je nach Erfordernis Funksignale und/oder Infrarotsignale und/oder HF-Signale und/oder Ultraschallsignale sein.

Die Empfangsbaugruppen dienen der Umsetzung der Steuersignale in Funktionsbefehle an die Funktionseinrichtungen. Durch die eigenen Adressen der Empfangsbaugruppen und Empfänger ist eine individuelle Steuerung einzelner Funktionseinrichtungen ermöglicht.

Als Stellglied bietet sich beispielsweise ein Heizelement an, das über eine Temperaturänderung eine Betätigung des Betätigungsorgans vollbringt.

Beispielsweise im Falle der Steuerung einer Heizung könnte das Stellglied eine Schließeinrichtung für die Lüftungsschlitze eines Thermostatventils aufweisen. Hierdurch wird dem Thermostaten in seinem Inneren eine höhere Temperatur als die Raumtemperatur vorgetäuscht. Infolgedessen ergibt sich eine Absenkung der Heizkörpertemperatur. Dieser Steuervorgang ist ohne ein Betätigen des Betätigungsorgans bzw. des Thermostatventils per Hand ermöglicht. Dabei können mehrere Thermostatventile einer Heizungsanlage individuell von der Zentrale aus gesteuert werden.

Als Stellglied könnte auch ein Stellmotor dienen, der beispielsweise auf einen Lichtschalter wirkt, der in eine eingeschaltete und/oder eine ausgeschaltete Stellung bewegbar ist. Neben der Steuerung eines Betätigungsorgans in Form eines Thermostaten einer Heizung könnte auch ein Betätigungsorgang in Form einer Einstellspindel gesteuert werden. Eine derartige Einstellspindel ist beispielsweise in einem thermostatischen System zur Steuerung von Heizungsventilen vorhanden, wie es in der DE 40 32 285 C1 beschrieben ist. Durch die Wirkung eines Stellmotors auf eine Einstellspindel kann eine Temperatur erhöht oder abgesenkt werden, indem die Einstellspindel nach links oder rechts gedreht wird. Hierdurch kann jede beliebige Temperaturerhöhung oder -absenkung vorgenommen werden. Eine Absenkung ist insbesondere über Nacht sinnvoll, wobei das Thermostatventil auf einer höheren Temperatur eingestellt bleibt. Der Energieaufwand für einen derartigen Einstellvorgang ist gering, da zur Beeinflussung des Ventils auf kleinstem Raum innerhalb des Thermostats eine höhere Umgebungstemperatur vorgetäuscht wird. Der Bereich, in dem die Beeinflussung vorgenommen wird, ist weitgehend geschlossen und daher weitgehend thermisch isoliert.

Eine Temperaturabsenkung ist auch dadurch erreichbar, dass der Thermostat künstlich durch ein Heizelement erwärmt wird.

In optisch besonders günstiger Weise könnte der Empfänger in einer Schalterdose der Funktionseinrichtung angeordnet sein. Hierdurch würde der zusätzlich installierte Empfänger optisch nicht auffallen. Eine derartige Schalterdose könnte mit dem Thermostaten einer Heizung verbunden sein. Hierdurch könnte eine Ein- und/oder Ausschaltung bewirkt werden.

Im Hinblick auf eine besonders sensible Steuerung könnte ein Sensor für die Temperatur im Thermostaten einer Heizung vorgesehen sein. Hierdurch kann eine Überhitzung im Thermostaten vermieden werden.

Des Weiteren könnte ein Sensor für die Raumtemperatur vorgesehen sein. Hierdurch könnte ein zu starkes Absenken der Temperatur vermieden werden.

Des Weiteren ist es auch denkbar, einen Sensor für die Position einer Einstellspindel im Allgemeinen oder der Einstellspindel des Thermostaten einer Heizung vorzusehen. Ein derartiger Sensor für die Position der Einstellspindel könnte eine Lichtschranke aufweisen. Bei einer bestimmten Position der Einstellspindel wird die Lichtschranke unterbrochen, wodurch die Heizung abgeschaltet wird. Bei der Rückbewegung der Spindel spricht die Lichtschranke wieder an und die Heizung wird eingeschaltet oder umgekehrt.

Weiterhin könnte ein Sensor für die Winkelposition des Einstellgriffs des Thermostaten einer Heizung vorgesehen sein. Ein derartiger Sensor ist besonders sinnvoll, wenn ein Stellmotor direkt auf den Einstellgriff wirkt, um die Temperatur automatisch zu steuern. Ein derartiger Sensor könnte ein Winkelgeber sein.

Ganz allgemein könnte die Zentrale eine HF-Sendestufe aufweisen. Sie übernimmt sämtliche Steuer- und Regelfunktionen, die erforderlich sind, um die Energie benutzerfreundlich zu verteilen. Die Architektur ist nach dem Master/Slave-Prinzip aufgebaut.

Insbesondere Thermostate, die autark von einer Elektronik gesteuert werden, können durch eine Empfangsbaugruppe erweitert werden. Dadurch ist es möglich, jedes Thermostat individuell von der Zentrale aus zu steuern, Im Datenfeld eines Steuersignals könnte z. B. angeführt sein, auf welche Temperatur ein Thermostat regeln soll.

Für jeden Empfänger oder für jede Empfangsbaugruppe könnten individuelle Daten über Bedienertasten eingegeben werden. Die Daten könnten beispielsweise eine Absenkungstemperatur, die Zeitdauer der Absenkung und/oder den Beginn der Absenkung umfassen.

Bei der Verwaltung vieler Empfänger oder Empfangsbaugruppen durch eine Zentrale ist die Eingabe der Daten über Bedienertasten mühsam. Als Erweiterung kann die Datenverwaltung auf einem Personal Computer durchgeführt werden. Das Eingeben der Daten ist hier erheblich einfacher als direkt über Bedienertasten an der Zentrale. Des Weiteren könnten eingegebene oder ermittelte Daten übersichtlicher dargestellt werden. Hierdurch wird die Verwaltung der Daten erheblich vereinfacht.

Zwischen einem Personal Computer und der Zentrale könnte ein Datenaustausch über eine Infrarot-Schnittstelle erfolgen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung zweier bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigen
- Fig. 1: in einem Blockdiagramm das erste Ausführungsbeispiel einer erfindungsgemäßen Vorrichtung zur Steuerung beliebiger Funktionseinrichtungen und
- Fig. 2: in einem Blockdiagramm das zweite Ausführungsbeispiel einer erfindungsgemäßen Vorrichtung zur Steuerung beliebiger Funktionseinrichtungen.

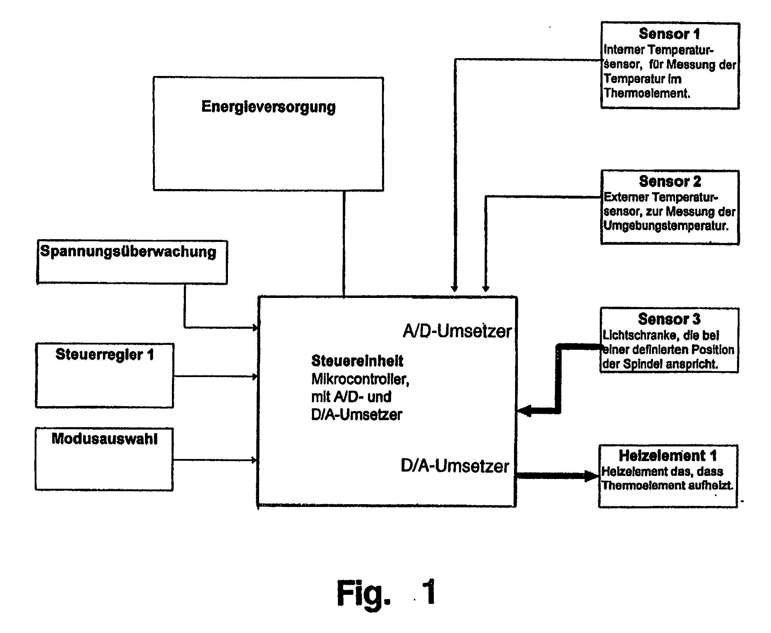

Fig. 1 zeigt in einem Blockdiagramm eine Vorrichtung zur Steuerung der Temperatur einer Heizung. Die Vorrichtung weist eine Zentrale mit einer Steuereinrichtung bzw. Steuereinheit auf. Die Steuereinheit weist einen Microcontroller mit einem A/D- und einem D/A-Umsetzer auf. Für die Steuereinheit ist eine Energieversorgung und eine Spannungsüberwachung vorgesehen. Mit einem Steuerregler 1 kann beispielsweise eine Temperatur eingestellt werden, auf die die Heizung über Nacht abgesenkt werden soll. Dabei bleibt das Thermostatventil auf eine höhere Temperatur eingestellt, die für den Tagesbetrieb vorgesehen ist.

Des Weiteren ist eine Modusauswahleinrichtung vorgesehen, mit der unterschiedliche Heizungsprogramme durchgeführt werden können.

Die Steuereinheit verwertet Daten von drei Sensoren. Der Sensor 1 dient der Messung der Temperatur im Thermoelement bzw. Thermostaten. Der Sensor 2 ist ein externer Temperatursensor zur Messung der Umgebungstemperatur bzw. Raumtemperatur. Der Sensor 3 ist eine Lichtschranke, die bei einer definierten Position einer Einstellspindel anspricht. Zur Bewegung der Einstellspindel ist ein Stellmotor vorgesehen.

Schließlich ist ein Heizelement 1 vorgesehen, dass das Thermoelement aufheizt. Durch das Aufheizen des Thermoelements wird dem Thermostaten eine höhere Umgebungstemperatur vorgetäuscht, was zu einer Absenkung der Temperatur führt.

Die Sensoren 1 und 2 können zur Schutzüberwachung eingesetzt werden, wobei eine maximale Temperatur im Thermoelement von 40° C und eine minimale Temperatur von 8° C bei der Raumtemperatur günstige Betriebsparameter sind.

Mit der Modusauswahl wird die Betriebsweise der Vorrichtung eingestellt. Dabei kann es sich zum einen um eine Schaltuhrsteuerung handeln, wobei beim Zuschalten einer Spannung eine Temperaturabsenkung erfolgt. Bei dem zweiten Modus - Impulssteuerung - erfolgt eine Absenkung bei Vorliegen eines Impulses.

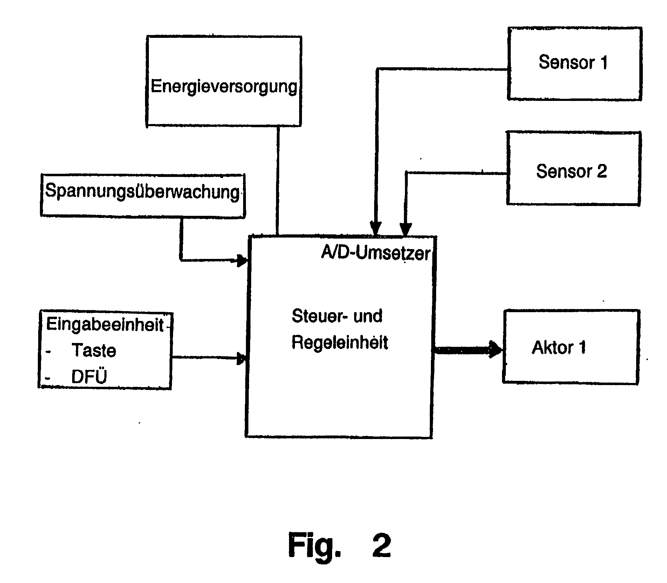

Fig. 2 zeit in einem Blockschaltbild das zweite Ausführungsbeispiel einer erfindungsgemäßen Vorrichtung zur Steuerung der Heizungstemperatur. Mit der hier beschriebenen Vorrichtung ist sowohl eine Erhöhung als auch eine Absenkung der Temperatur möglich. Hierzu ist am Thermostaten ein Stellmotor vorgesehen, der eine Einstellspindel durch eine Drehbewegung nach links oder nach rechts bewegen kann. Durch Drehung der Einstellspindel kann jede beliebige Temperaturerhöhung oder - absenkung erreicht werden. Die Steuer- und Regeleinheit der Zentrale weist einen Mircocontroller mit einem A/D-Umsetzer und eine Motorsteuerung auf. Des Weiteren sind eine Energieversorgung, eine Spannungsüberwachung und eine Eingabeeinheit vorgesehen. Die Eingabeeinheit weist Bedienungstasten auf und ist über eine DFÜ-Einheit ansteuerbar.

Ein Sensor 1 dient zur externen Temperaturmessung bzw. zur Messung der Raumtemperatur. Ein Sensor 2 ist ein Winkelgeber zur Ermittlung der Position des Einstellgriff. Schließlich ist ein Aktor 1 in Form eines Stellmotors zum Antrieb der Einstellspindel vorgesehen.

Mittels der durch den Sensor 1 ermittelten Raumtemperatur ist eine Steuerung der Heizungstemperatur über die Zentrale möglich.

Bei Verwendung eines Einstellgriffs kann über den Sensor 2 die Position und somit die gewünschte Temperatur ermittelt werden. Der Stellmotor bewegt die Einstellspindel nach rechts oder links, wobei über den Hub der Einstellspindel jede Absenktemperatur oder jede Temperaturerhöhung eingestellt werden kann.

Die Steuer- und Regeleinheit stellt das Herz der Anlage dar. Die komplette Steuerung übernimmt ein Microcontroller. Moderne Bausteine dieser Art kommen ohne externe Programm- und Datenspeicher aus. Auch gibt es Bausteine, die den nötigen Systemtakt intern erzeugen. Im Endeffekt kann die gesamte Steuerung, bis auf die Energieversorgung und den Leistungsteil, in einem Baustein untergebracht werden. Greift man auf die SMD-Technik zurück, kann diese Steuerung auf engstem Raum untergebracht werden.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

## Patentansprüche

1. Vorrichtung zur Steuerung beliebiger Funktionseinrichtungen im Haus, beispielsweise Licht, Rolladen oder Heizung, mit einer eine Steuereinrichtung umfassenden Zentrale mit Bedienungseinheit, wobei die Zentrale eine Empfangseinrichtung aufweist und Steuersignale drahtlos an den jeweiligen Funktionseinrichtungen zugeordnete Empfangsbaugruppen sendet, wobei die Empfangsbaugruppen jeweils einen Empfänger aufweisen,
**dadurch gekennzeichnet, dass** über die Empfangseinrichtung eine Rückkopplung mit den Empfangsbaugruppen ermöglicht ist, dass die Zentrale zur Übermittlung von Informationen an die Zentrale mit Sensoren in Kommunikation steht, wobei diese Informationen bei der Steuerung der Funktionseinrichtungen berücksichtigt werden können, dass zur Feststellung, ob die Zentrale fehlerfrei arbeitet oder überhaupt arbeitet, eine periodische Abfrage bei der Zentrale durch die Empfangsbaugruppen erfolgt, dass die Steuersignale ein definiertes Übertragungsprotokoll mit Adress- und Datenfeld umfassen, dass die Empfangsbaugruppen oder Empfänger jeweils eine eigene Adresse aufweisen und dass mindestens eine Empfangsbaugruppe ein auf ein Betätigungsorgan der zugeordneten Funktionseinrichtung wirkendes Stellglied aufweist.

2. Vorrichtung nach Anspruch 1, **dadurch gekennzeichnet, dass** die Steuereinrichtung ein Rechner ist.

3. Vorrichtung nach Anspruch 1 oder 2, **dadurch gekennzeichnet, dass** die Steuereinrichtung einen Zeitgeber aufweist.

4. Vorrichtung nach Anspruch 3, **dadurch gekennzeichnet, dass** der Zeitgeber eine RTC-Uhr oder eine DCF77 ist.

5. Vorrichtung nach einem der Ansprüche 1 bis 4, **dadurch gekennzeichnet, dass** die Bedienungseinheit ein Tastenfeld aufweist.

6. Vorrichtung nach einem der Ansprüche 1 bis 5, **dadurch gekennzeichnet, dass** die Steuersignale Funksignale und/oder Infrarotsignale und/oder HF-Signale und/oder Ultraschallsignale sind.

7. Vorrichtung nach einem der Ansprüche 1 bis 6, **dadurch gekennzeichnet, dass** das Stellglied ein Heizelement ist.

8. Vorrichtung nach einem der Ansprüche 1 bis 7, **dadurch gekennzeichnet, dass** das Stellglied eine Schließeinrichtung für die Lüftungsschlitze eines Thermostatventils einer Heizung aufweist.

9. Vorrichtung nach einem der Ansprüche 1 bis 8, **dadurch gekennzeichnet, dass** das Stellglied einen Stellmotor aufweist.

10. Vorrichtung nach einem der Ansprüche 1 bis 9, **dadurch gekennzeichnet, dass** das Betätigungsorgan der Thermostat einer Heizung ist.

11. Vorrichtung nach einem der Ansprüche 1 bis 10, **dadurch gekennzeichnet, dass** das Betätigungsorgan eine Einstellspindel ist.

12. Vorrichtung nach einem der Ansprüche 1 bis 11, **dadurch gekennzeichnet, dass** das Betätigungsorgan ein Schalter ist.

13. Vorrichtung nach einem der Ansprüche 1 bis 12, **dadurch gekennzeichnet, dass** der Empfänger in einer Schalterdose der Funktionseinrichtung angeordnet ist.

14. Vorrichtung nach Anspruch 13 **dadurch gekennzeichnet, dass** die Schalterdose mit dem Thermostaten einer Heizung verbunden ist.

15. Vorrichtung nach einem der Ansprüche 1 bis 14, **dadurch gekennzeichnet, dass** ein Sensor für die Temperatur im Thermostaten einer Heizung vorgesehen ist.

16. Vorrichtung nach einem der Ansprüche 1 bis 15, **dadurch gekennzeichnet, dass** ein Sensor für die Raumtemperatur vorgesehen ist.

17. Vorrichtung nach einem der Ansprüche 1 bis 16, **dadurch gekennzeichnet, dass** ein Sensor für die Position der Einstellspindel des Thermostaten einer Heizung vorgesehen ist.

18. Vorrichtung nach Anspruch 17, **dadurch gekennzeichnet, dass** der Sensor für die Position der Einstellspindel eine Lichtschranke aufweist.

19. Vorrichtung nach einem der Ansprüche 1 bis 18, **dadurch gekennzeichnet, dass** ein Sensor für die Winkelposition des Einstellgriffs des Thermostaten einer Heizung vorgesehen ist.

20. Vorrichtung nach Anspruch 19, **dadurch gekennzeichnet, dass** der Sensor ein Winkelgeber ist.

## Claims

1. Apparatus for controlling any domestic functional devices, for example light, roller shutter or heating system, with a control centre, comprising a control device, with operating unit, wherein the control centre has a receiving device and transmits control signals wirelessly to receiving assemblies associated with the respective functional devices, wherein the receiving assemblies each have a receiver,
**characterised in that** a feedback with the receiving assemblies is enabled via the receiving device, that the control centre communicates with sensors in order to transmit information to the control centre, wherein this information can be taken into account when controlling the functional devices, that a periodic interrogation at the control centre takes place through the receiving assemblies in order to establish whether the control centre is working error-free or working at all, that the control signals comprise a defined transmission protocol with address and data field, that the receiving assemblies or receivers each have their own address, and that at least one receiving assembly has a final control element which acts on an actuating member of the associated functional device.

2. Apparatus according to Claim 1, **characterised in that** the control device is a computer.

3. Apparatus according to Claim 1 or 2, **characterised in that** the control device has a timer.

4. Apparatus according to Claim 3, **characterised in that** the timer is a RTC clock or a DCF77.

5. Apparatus according to any one of Claims 1 to 4,
**characterised in that** the operating unit has a keyboard.

6. Apparatus according to any one of Claims 1 to 5,
**characterised in that** the control signals are radio signals and/or infrared signals and/or HF signals and/or ultrasonic signals.

7. Apparatus according to any one of Claims 1 to 6,
**characterised in that** the final control element is a heating element.

8. Apparatus according to any one of Claims 1 to 7,
**characterised in that** the final control element has a closing device for the ventilation slots of a thermostatic valve of a heating system.

9. Apparatus according to any one of Claims 1 to 8,
**characterised in that** the final control element has a servomotor.

10. Apparatus according to any one of Claims 1 to 9,
**characterised in that** the actuating member of the thermostat is a heating system.

11. Apparatus according to any one of Claims 1 to 10,
**characterised in that** the actuating member is an adjusting spindle.

12. Apparatus according to any one of Claims 1 to 11,
**characterised in that** the actuating member is a switch.

13. Apparatus according to any one of Claims 1 to 12,
**characterised in that** the receiver is disposed in a switch box of the functional device.

14. Apparatus according to Claim 13, **characterised in that** the switch box is connected to the thermostat of a heating system.

15. Apparatus according to any one of Claims 1 to 14,
**characterised in that** a sensor is provided for the temperature in the thermostat of a heating system.

16. Apparatus according to any one of Claims 1 to 15,
**characterised in that** a sensor is provided for the ambient temperature.

17. Apparatus according to any one of Claims 1 to 16,
**characterised in that** a sensor is provided for the position of the adjusting spindle of the thermostat of a heating system.

18. Apparatus according to Claim 17, **characterised in that** the sensor for the position of the adjusting spindle has a light barrier.

19. Apparatus according to any one of Claims 1 to 18,
**characterised in that** a sensor is provided for the angular position of the adjusting handle of the thermostat of a heating system.

20. Apparatus according to Claim 19, **characterised in that** the sensor is an angle transducer.

## Revendications

1. Dispositif pour la commande d'appareils fonctionnels domestiques quelconques, par exemple éclairage, volets roulants ou chauffage, avec une centrale, comprenant un appareil de commande, avec une unité de manoeuvre, la centrale présentant un appareil récepteur et envoyant sans fil des signaux de commande à des groupes récepteurs de construction adjoints aux appareils fonctionnels respectifs, les groupes récepteurs de construction présentant respectivement un récepteur,
**caractérisé par le fait qu'**une rétroaction avec les groupes récepteurs de construction est rendue possible par l'intermédiaire de l'appareil récepteur, que la centrale est en communication avec des capteurs pour la transmission d'informations à la centrale, ces informations pouvant être prises en considération lors de la commande des appareils fonctionnels, qu'une interrogation périodique de la centrale par les groupes récepteurs de construction a lieu pour déterminer si la centrale fonctionne sans défaut ou toutefois travaille, que les signaux de commande comprennent un protocole de transmission défini avec champ d'adresses et de données, que les groupes récepteurs de construction ou récepteurs présentent respectivement une adresse propre et qu'au moins un groupe récepteur de construction présente un organe final agissant sur un organe d'actionnement du dispositif fonctionnel adjoint

2. Dispositif selon la revendication 1,
**caractérisé par le fait que** l'appareil de commande est un calculateur.

3. Dispositif selon la revendication 1 ou 2,
**caractérisé par le fait que** l'appareil de commande est un générateur de rythmes.

4. Dispositif selon la revendication 3,
**caractérisé par le fait que** le générateur de rythmes est une horloge RTC ou un DCF77.

5. Dispositif selon l'une des revendications 1 à 4,
**caractérisé par le fait que** l'unité de manoeuvre présente un clavier.

6. Dispositif selon l'une des revendications 1 à 5,
**caractérisé par le fait que** les signaux de commande sont des signaux radio et/ou des signaux infrarouges et/ou des signaux haute fréquence et/ou, des signaux ultrasonores.

7. Dispositif selon l'une des revendications 1 à 6,
**caractérisé par le fait que** l'organe final est un élément de chauffage.

8. Dispositif selon l'une des revendications 1 à 7,
**caractérisé par le fait que** l'organe final présente un dispositif de fermeture pour la fente d'aération d'une vanne thermostatique d'un appareil de chauffage.

9. Dispositif selon l'une des revendications 1 à 8,
**caractérisé par le fait que** l'organe final présente un servomoteur.

10. Dispositif selon l'une des revendications 1 à 9,
**caractérisé par le fait que** l'organe d'actionnement est le thermostat d'un appareil de chauffage.

11. Dispositif selon l'une des revendications 1 à 10,
**caractérisé par le fait que** l'organe d'actionnement est une tige de réglage.

12. Dispositif selon l'une des revendications 1 à 11,
**caractérisé par le fait que** l'organe d'actionnement est un commutateur.

13. Dispositif selon l'une des revendications 1 à 12,
**caractérisé par le fait que** le récepteur est disposé dans une boîte de commutateur de l'appareil fonctionnel.

14. Dispositif selon la revendication 13,
**caractérisé par le fait que** la boîte de commutateur est reliée au thermostat d'un appareil de chauffage.

15. Dispositif selon l'une des revendications 1 à 14,
**caractérisé par le fait qu'**un capteur pour la température est prévu dans le thermostat d'un appareil de chauffage.

16. Dispositif selon l'une des revendications 1 à 15,
**caractérisé par le fait qu'**un capteur pour la température ambiante est prévu.

17. Dispositif selon l'une des revendications 1 à 16,
**caractérisé par le fait qu'**un capteur pour la position de la tige de réglage du thermostat d'un appareil de chauffage est prévu.

18. Dispositif selon la revendication 17,
**caractérisé par le fait que** le capteur pour la position de la tige de réglage présente un barrage photoélectrique.

19. Dispositif selon l'une des revendications 1 à 18,
**caractérisé par le fait qu'**un capteur pour la position angulaire de la poignée de réglage du thermostat d'un appareil de chauffage est prévu.

20. Dispositif selon la revendication 19,
**caractérisé par le fait que** le capteur est un capteur angulaire.
